Europäisches Patentamt

**(19)** European Patent Office

Office européen des brevets

(11) Veröffentlichungsnummer: **0 066 201**
**B1**

# (12) EUROPÄISCHE PATENTSCHRIFT

(45) Veröffentlichungstag der Patentschrift:
02.10.85

(21) Anmeldenummer: 82104420.3

(22) Anmeldetag: 19.05.82

(51) Int. Cl.⁴: **G 02 B 6/44**

(54) Verfahren und Einrichtung zur Herstellung eines optischen Übertragungselementes.

(30) Priorität: 27.05.81 DE 3121222

(43) Veröffentlichungstag der Anmeldung:
08.12.82 Patentblatt 82/49.

(45) Bekanntmachung des Hinweises auf die Patenterteilung:
02.10.85 Patentblatt 85/40

(84) Benannte Vertragsstaaten:
DE FR GB IT NL

(56) Entgegenhaltungen:
DE - A - 2 516 663
DE - A - 3 009 406
DE - B - 3 006 054
DE - C - 3 006 055
FR - A - 1 381 165
FR - A - 2 309 021
FR - A - 2 435 432

(73) Patentinhaber: Siemens Aktiengesellschaft, Berlin und
München Wittelsbacherplatz 2, D-8000 München 2 (DE)

(72) Erfinder: Mayr, Ernst, Ing.grad., Wernbergstrasse 5,
D-8130 Starnberg (DE)
Erfinder: Oestreich, Ulrich, Dipl.-Ing.,
Karl-Witthalm-Strasse 15, D-8000 München 70 (DE)
Erfinder: Schöber, Gernot, Ing. grad.,
Waterloo-Strasse 63, D-8000 München 71 (DE)

## Beschreibung

Die Erfindung betrifft ein Verfahren zur Herstellung eines optischen Übertragungselementes, das mehrere zu einem Bündel SZ-verseilte Lichtwellenleiter innerhalb einer rohrförmigen Umhüllung enthält.

Bei der SZ-Verseilung besteht die Gefahr, daß das Verseilgut sich an den Umkehrstellen der Verseilung aufseilt (auffaltet). Es ist bekannt, dies dadurch zu verhindern, daß eine Haltewendel aufgebracht wird, welche die Verseilelemente daran hindert, die ihnen durch den Verseilvorgang aufgezwungene Konfiguration wieder zu verändern. Bei der Verseilung der sehr empfindlichen Lichtwellenleiter besteht eine Schwierigkeit darin, daß diese durch die Haltewendel in unerwünschter Weise verformt werden. Andererseits muß aber sichergestellt sein, daß die faserförmigen Lichtwellenleiter zumindest bis zur Aufbringung der sie später umschließenden rohrförmigen Umhüllung am Aufseilen gehindert werden.

Aus der DE-A-2 516 663 ist es bekannt, die Kerne (Seelen) optischer Fasern auf Trommeln unterzubringen. Da ein derartiges Kernmaterial für sich selbst noch keinen Lichtwellenleiter darstellt, muß es mit einer Umhüllung umgeben werden (Mantel), welche einen gegenüber dem Brechungsindex des Kerns niedrigeren Brechungsindex aufweist. Um dies zu erreichen, werden die Kernfasern durch einen ein Lösungsmittel enthaltenden Behälter hindurchgeführt, worauf die nunmehr aus Kern und Mantel bestehenden Lichtwellenleiter hergestellt sind. Das so erhaltene Faserbündel wird einer Trocknungseinrichtung zugeführt und anschließend aufgetrommelt.

Aus der FR-A-2 435 432 ist eine Einrichtung bekannt, mit der es möglich ist, eine Lichtwellenleiter-Bandleitung herzustellen. Hierzu wird ein einzelner Lichtwellenleiter durch einen Behälter geführt, der ein wärmehärtbares Harz enthält. Außerdem ist am unteren Ende einer die Lichtwellenleiter aufnehmenden Trommel eine Auftragswalze vorgesehen, welche ein ebenfalls wärmehärtbares Harz aus einem Vorratsbehälter entnimmt. Auf diese Weise werden die nebeneinander aufgetrommelten Lichtwellenleiter mit einer durchgehenden wärmehärtbaren Harzschicht versehen, so daß nach dem Aushärten und Durchtrennen des Lichtwellenleiterwickels eine Bandleitung erhalten wird.

Gemäß der Erfindung, welche sich auf ein Verfahren der eingangs genannten Art bezieht, wird die Aufgabe, die Lichtwellenleiter am Aufseilen zu hindern, dadurch gelöst, daß unmittelbar nach dem in senkrechter Durchlaufrichtung arbeitenden SZ-Verseilvorgang im Bereich des Verseilpunktes und etwas oberhalb desselben das Lichtwellenleiter-Bündel durch eine haftende Füllmasse hindurchgeführt wird, so daß durch die haftende Füllmasse ein Aufseilen der Lichtwellenleiter des Bündels zumindest bis zum Aufbringen und Erstarren der Umhüllung verhindert ist.

Diese haftende Füllmasse genügt, um das SZ-verseilte Lichtwellenleiter-Bündel zumindest kurzzeitig am Aufseilen zu hindern. Da eine Füllmasse vielfach ohnehin zum Abdichten der lose aufsitzenden Bündelhülle benötigt wird, tritt weder ein zusätzlicher Material- noch ein zusätzlicher Arbeitsaufwand auf. Die sonst notwendigen und relativ komplizierten Haltewendel-Spinneinrichtungen od. dgl. können entfallen. Da nach dem Aufbringen und Erstarren der Umhüllung diese dafür sorgt, daß ein Aufseilen verhindert wird, braucht die haftende Füllmasse nur im Übergangsbereich die Umkehrstellen zu fixieren.

Sonstige Weiterbildungen des erfindungsgemäßen Verfahrens sind in den Unteransprüchen wiedergegeben.

Die Erfindung betrifft weiterhin eine Einrichtung zur Durchführung des Verfahrens, welche dadurch gekennzeichnet ist, daß eine senkrecht arbeitende SZ-Verseileinheit vorgesehen ist, an deren Ausgang ein Behälter vorgesehen ist, welcher die haftende Füllmasse enthält, wobei die Anordnung und Füllhöhe des Behälters so gewählt sind, daß der Verseilpunkt innerhalb der Füllmasse zu liegen kommt.

Die Erfindung und ihre Weiterbildungen werden nachfolgend an Hand von Zeichnungen näher erläutert. Es zeigt

Fig. 1 in Seitenansicht eine nach dem erfindungsgemäßen Verfahren arbeitende Verseileinrichtung und

Fig. 2 einen Teilausschnitt in vergrößerter Darstellung des Extruders für die Aufbringung der rohrförmigen Umhüllung.

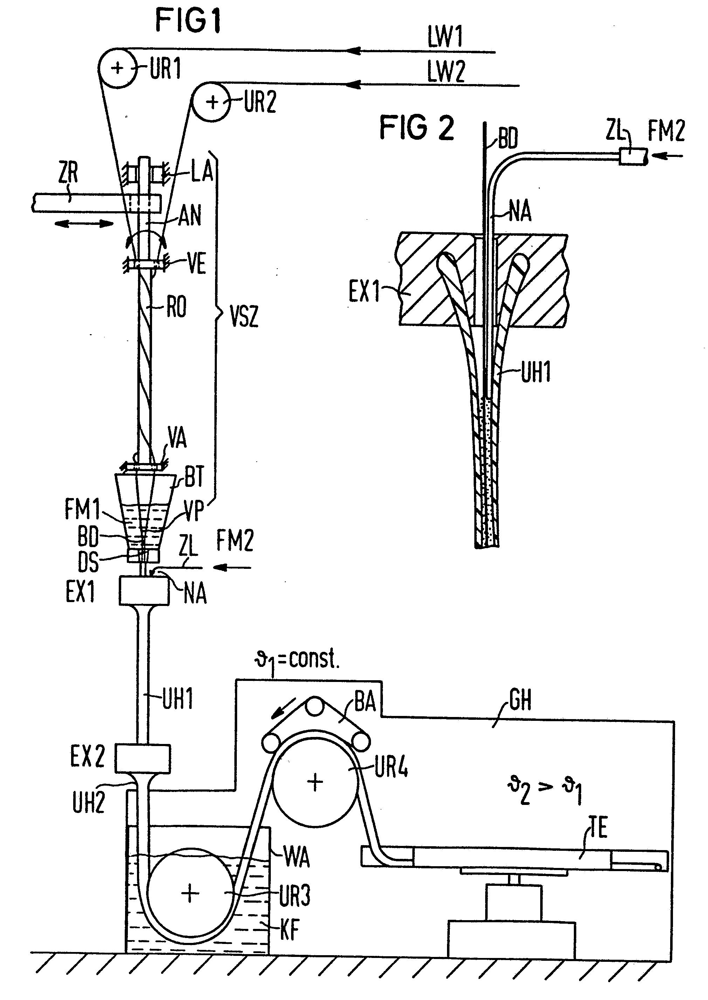

In Fig. 1 sind zwei faserförmige Lichtwellenleiter LW1 und LW2 dargestellt, welche von hier nicht gezeichneten Vorratsspulen gezogen und über Umlenkrollen UR1 und UR2 in eine vertikal von oben nach unten verlaufende Bahn gebracht werden. Die Lichtwellenleiter LW1 und LW2 sind mit entsprechenden Schutzschichten versehen und durch verschiedene Kennzeichnung unterscheidbar gemacht. In der Praxis werden üblicherweise mehr als nur zwei Lichtwellenleiter miteinander verseilt, wobei innerhalb eines Bündels zweckmäßig zwischen 2 und 12 Lichtwellenleiter vorgesehen sein können.

Die SZ-Verseilung wird in dem dargestellten Ausführungsbeispiel im Bereich VSZ durch einen sogenannten Rohrspeicher vorgenommen, bei dem ein Rohr RO mit anschließender Verseilscheibe VE während der Verseilung abwechselnd in der einen Richtung und in der anderen Richtung mit Verseilgut belegt wird. Auf der Oberfläche des Rohres RO liegen die Lichtwellenleiter LW1 und LW2 und rollen auf ihr ab, wodurch Torsion während der Verseilung weitgehend vermieden wird. Das Rohr RO weist im oberen Teil eine Verlängerung AN auf, die in einem Lager LA drehbar gelagert ist. Der Antrieb des Rohres erfolgt über einen Zahnriemen ZR, der entsprechend der gewünschten Schlagzahl jeweils in unterschiedlichen Drehrichtungen bewegt wird. Die am oberen Ende des Rohrspeichers RO angebrachte ruhende Verseilscheibe VE weist entsprechende Öffnungen auf, durch welche die Lichtwellenleiter LW1 und LW2 hindurchgeführt werden. Die angetriebene Verseilscheibe VA ist am Ausgang des Rohrspeichers RO angebracht. Nähere Einzelheiten über den Aufbau derartiger Rohrspeicher sind beispielsweise in der DE-A-3 006 054 und der DE-A-3 006 055 beschrieben.

Vom Ausgang der unteren Verseilscheibe VA aus laufen die einzelnen Lichtwellenleiter LW1, LW2 im Verseilpunkt VP zusammen. Dieser Verseilpunkt VP liegt im Inneren eines trichterförmigen Behälters BT, der mit einer entsprechenden haftenden Füllmasse FM1 gefüllt ist. Der Pegel der Füllmasse liegt stets oberhalb des Verseilpunktes und zwar etwa 10 bis 50 mm. Die Füllmasse ist thixotrop, so daß sie nicht abläuft und ein Auflösen des Verseilverbandes von den Umkehrstellen aus verhindert (Mindestscherspannung ca. 200 bis 500 dyn/cm²).

Das aus den verseilten Lichtwellenleitern bestehende Bündel BD wird durch die haftende Füllmasse FM1 soweit zusammengehalten, daß ein Aufseilen oder Auffalten verhindert wird. Am unteren Ende des Behälters BT ist eine düsenförmige Durchtrittsöffnung DS vorgesehen, deren lichte Weite etwa dem Durchmesser des Bündels BD entspricht und die gleichzeitig als Verseilnippel dient.

Für die Füllmasse FM1 eignen sich besonders folgende Substanzen: Paraffinöl, Polybuten und Aerosil.

Unmittelbar an den Ausgang des Behälters BT schließt sich ein erster Extruder EX1 an, der zum Aufbringen einer Umhüllung UH1 auf das Bündel BD dient. Dabei ist der Innendurchmesser der Hülle UH1 zweckmäßig um 0,2 mm bis 1 mm größer als der Durchmesser des Bündels BD. Dieses wird dadurch lose innerhalb der inneren Umhüllung UH1 gehalten. Zur Erzeugung eines gefüllten Kabels wird weitere Füllmasse FM2 der obigen Art benötigt, die über eine Zuführungsleitung ZL in eine Injektionsnadel NA eingegeben wird. Die Menge der zugeführten Füllmasse ist so gewählt, daß der gesamte freie Innenraum der Umhüllung UH1 vollständig mit Füllmasse FM2 + FM1 angefüllt wird. Hierzu ist zweckmäßig eine geschwindigkeitsproportionale, d. h. abhängig vom Vorschub der Verseileinrichtung ablaufende Steuerung der Menge der zugeführten Füllmasse FM2 (und ggf. FM1) vorzusehen. Die Füllmasse FM2 wird zweckmäßig im kalten Zustand (Raumtemperatur) eingegeben, wobei die Nadel NA sich in das Innere des Reckkegels der Umhüllung UH1 erstreckt. Dies hat den Vorteil, daß die Füllmasse FM2 unmittelbar von innen her mit zur Kühlung der Umhüllung UH1 beiträgt. Einzelheiten hierzu sind aus Fig. 2 ersichtlich, wo der Extruder E1 im Schnitt dargestellt ist und die Injektionsnadel durch den Extruderkopf EX1 hindurch bis in den Reckkegel der Umhüllung UH1 reicht.

Bei Verwendung einer zweischichtigen Umhüllung folgt in einem gewissen Abstand auf den ersten Extruder EX1 ein zweiter Extruder EX2, der eine Umhüllung UH2 dichtsitzend auf die Umhüllung UH1 aufbringt. Das so gewonnene optische Übertragungselement wird immer noch in vertikaler Richtung in das Innere eines Gehäuses GH eingeführt, in dem eine Temperatur $\vartheta 2$ herrscht, die größer ist als die Außentemperatur $\vartheta 1$, in der der Verseilvorgang und der Umhüllungsvorgang abläuft. Das Übertragungselement gelangt in eine Wanne WA, in der eine Kühlflüssigkeit KF (insbesondere Wasser) vorhanden ist. Weiterhin ist innerhalb der Kühlflüssigkeit KF eine Umlenkrolle UR3 vorgesehen, welche das nunmehr stark abgekühlte Übertragungselement zu einer weiteren Umlenkrolle UR4 umlenkt, welche oberhalb der Umlenkrolle UR3 angeordnet ist. Diese Umlenkrolle UR4 ist mit einem Bandabzug BA versehen, welche den Vorschub des optischen Übertragungselementes bewirkt. Innerhalb des Gehäuses GH ist weiterhin ein rotierender Teller TE vorgesehen, auf den in horizontal verlaufenden Lagen das Übertragungselement mit einem großen Durchmesser abgelegt wird. Einzelheiten einer derartigen Ablageeinrichtung sind in der DE-A-3 111 963.8 der Anmelderin beschrieben.

Für den Verseilvorgang gemäß der Erfindung sind zweckmäßig folgende Dimensionierungen einzuhalten:

Die SZ-Verseilung wird mit langem Schlag zwischen 100 mm bis 500 mm, vorzugsweise im Bereich von 300 mm durchgeführt. Die Verseilung erfolgt vorzugsweise mit Umkehrstellen im Abstand von 8 bis 10 Schlägen.

Die Füllmasse FM1 sollte das Verseilbündel BD zweckmäßig allseitig umschließen, d. h. die Lichtwellenleiter sollen nach außen durch die Füllmasse FM1 abgedeckt sein. Dies hat den Vorteil, daß die Lichtwellenleiter LW1 und LW2 nicht mit der Innenseite der ersten Umhüllung UH1 in Berührung kommen und dadurch ein etwaiges Ankleben od. dgl. an dieser verhindert wird.

An Stelle eines Rohrspeichers RO zur SZ-Verseilung kann auch jede andere Art von oszillierend angetriebenen Speichern für den Bereich VSZ verwendet werden.

Die Einführung der Lichtwellenleiter LW1 und LW2 in die Verseileinrichtung erfolgt mit einer definierten Bremskraft, die vorzugsweise etwa in der Größenordnung von 0,1 N – 1 N liegt.

Für die Füllmassen FM1 und FM2 wird zweckmäßig die gleiche Substanz verwendet.

Die Innentemperatur $\vartheta 2$ im Gehäuse GH1 wird zweckmäßig stabilisiert und auf einem bestimmten Wert gehalten, welcher der beabsichtigten späteren Kontraktion nach Abkühlung entspricht. Schwankungen der Temperatur sollten nicht über $\pm 1,5°C$ hinausgehen. Das fertige Übertragungselement wird auf einen Teller TE mit einem Wickeldurchmesser zwischen $1300 \pm 200$ mm gelegt. Da die Lichtwellenleiter unter einer bestimmten Bremskraft in die Verseileinrichtung eingegeben werden, legt sich das Faserbündel BD stets an die Innenseite der losen Hülle an. Dies führt zu einem Längenfehlbetrag der Faser von rund $2 \cdot 10^{-4}$, der durch Kontraktion der Hülle nach Abschluß der Fertigung durch Abkühlen auf die Umgebungstemperatur kompensiert wird.

Das so auf dem Teller TE zur Verfügung stehende Übertragungselement kann bereits selbst die Seele eines Lichtwellenleiter-Kabels sein, wozu die Wandstärken UH1 und UH2 entsprechend zu dimensionieren sind. Es ist aber auch möglich, ein derartiges Übertragungselement als Grundbündel für einen weiteren Verseilvorgang zu verwenden, in dem mehrere derartige Grundbündel zu einem größeren Lichtwellenleiter-Kabel verseilt und mit einem gemeinsamen Außenmantel umgeben werden.

## Patentansprüche

1. Verfahren zur Herstellung eines optischen Übertragungselementes, das mehrere zu einem Bündel SZ-verseilte Lichtwellenleiter innerhalb einer rohrförmigen Umhüllung enthält, dadurch gekennzeichnet, daß unmittelbar nach dem in senkrechter Durchlaufrichtung arbeitenden SZ-Verseilvorgang (in VSZ) im Bereich des Verseilpunktes (VP) und etwas oberhalb desselben das Lichtwellenleiter-Bündel (BD) durch eine haftende Füllmasse (FM1) hindurchgeführt wird, so daß durch die haftende Füllmasse (FM1) ein Aufseilen der Lichtwellenleiter (LW1, LW2) des Bündels (BD) zumindest bis zum Aufbringen und Erstarren der Umhüllung (UH1) verhindert ist.

2. Verfahren nach Anspruch 1, dadurch gekennzeichnet, daß die Füllmasse (FM1) in einem Behälter (BT) untergebracht ist, durch den das Bündel (BD) in vertikaler Richtung hindurchbewegt wird.

3. Verfahren nach einem der vorhergehenden Ansprüche, dadurch gekennzeichnet, daß das die Füllmasse (FM1) enthaltende Bündel (BD) mit weiterer Füllmasse (FM2) umgeben und so das Innere der Umhüllung (UH1) vollständig gefüllt wird.

4. Verfahren nach Anspruch 3, dadurch gekennzeichnet, daß das Ende des Reckkegels bei durch Extrusion hergestellter Umhüllung (UH1) sich dort befindet, wo die vorzugsweise kalte weitere Füllmasse (FM2) die aufgespritzte Umhüllung (UH1) berührt.

5. Verfahren nach einem der Ansprüche 3 oder 4, dadurch gekennzeichnet, daß die Zuführung der Füllmasse (FM1, FM2) geschwindigkeitsproportional zum Vorschub der Lichtwellenleiter (LW1, LW2) durchgeführt wird.

6. Verfahren nach einem der vorhergehenden Ansprüche, dadurch gekennzeichnet, daß die Umhüllung in aufeinanderfolgenden Arbeitsvorgängen mehrschichtig aufgebracht wird.

7. Verfahren nach einem der vorhergehenden Ansprüche, dadurch gekennzeichnet, daß nach dem Aufbringen der jeweils letzten Umhüllung eine Abkühlung durchgeführt wird.

8. Verfahren nach Anspruch 7, dadurch gekennzeichnet, daß erst nach der Hauptabkühlung eine Umlenkung in die Horizontale und eine entsprechende Ablage vorgenommen wird.

9. Verfahren nach einem der vorhergehenden Ansprüche, dadurch gekennzeichnet, daß die Lichtwellenleiter (LW1, LW2) mit einer definierten Bremskraft der Verseileinrichtung (VSZ) zugeführt werden.

10. Einrichtung zur Durchführung des Verfahrens nach einem der vorhergehenden Ansprüche, dadurch gekennzeichnet, daß eine senkrecht arbeitende SZ-Verseileinheit (VSZ) vorgesehen ist, an deren Ausgang ein Behälter (BT) vorgesehen ist, welcher die haftende Füllmasse (FM1) enthält, wobei die Anordnung und Füllhöhe des Behälters (BT) so gewählt sind, daß der Verseilpunkt (VP) innerhalb der Füllmasse (FM1) zu liegen kommt.

11. Einrichtung nach Anspruch 10, dadurch gekennzeichnet, daß unmittelbar nach dem, vorzugsweise trichterförmigen, Behälter (BT) ein Extruder (EX1) für die Aufbringung der Umhüllung (UH1) angeordnet ist.

12. Einrichtung nach einem der Ansprüche 11 oder 12, dadurch gekennzeichnet, daß als SZ-Verseileinheit (VSZ) ein senkrecht angeordneter Rohrspeicher vorgesehen ist.

## Claims

1. A method of producing an optical transmission element which comprises a plurality of light waveguides, which are SZ-stranded to form a bundle, within a tubular envelope, characterised in that immediately after the SZ-stranding process in the vertical direction of passage (in VSZ), in the vicinity of the stranding point (VP) and some what above the latter, the light waveguide bundle (BD) is passed through an adhesive filling material (FM1), so that by means of the adhesive filling material (FM1) unstranding of the light waveguides (LW1, LW2) of the bundle (BD) is prevented at least until the envelope (UH1) has been applied and hardened.

2. A method as claimed in claim 1, characterised in that the filling material (FM1) is accommodated in a container (BT), through which the bundle (BD) is passed in the vertical direction.

3. A method as claimed in one of the preceding claims, characterised in that the bundle (BD) containing the filling material (FM1) is surrounded with further filling material (FM2) and the interior of the envelope (UH1) thus completely filled.

4. A method as claimed in claim 3, characterised in that with an envelope (UH1) which is produced by extrusion, the end of the drawing cone is located where the, preferably cold, further filling material (FM2) contacts the extruded envelope (UH1).

5. A method as claimed in one of claims 3 or 4, characterised in that the supply of the filling material (FM1, FM2) is carried out so as to be proportional as regards speed to the advance of the light waveguides (LW1, LW2).

6. A method as claimed in one of the preceding claims, characterised in that the envelope is applied in multi-layer form in successive operating steps.

7. A method as claimed in one of the preceding claims, characterised in that after the application of the last envelope, cooling is carried out.

8. A method as claimed in claim 7, characterised in that only after the main cooling step is a turn into the horizontal and suitable storage carried out.

9. A method as claimed in one of the preceding claims, characterised in that the light waveguides (LW1, LW2) are fed to the stranding device (SVZ) with a predetermined braking force.

10. Apparatus for carrying out the method as claimed in one of the preceding claims, characterised in that there is provided a vertically-operating SZ-stranding unit (VSZ), provided at its outlet with a container (BT) which contains the adhesive filling material (FM1), the arrangement and filling level of the container (BT) being so selected that the stranding point (VP) lies within the filling material (FM1).

11. Apparatus as claimed in claim 10, characterised in that an extruder (EX1) for the application of the envelope (UH1) is arranged immediately after the container (BT), which is preferably funnel-shaped.

12. Apparatus as claimed in one of claims 11 or 12, characterised in that a vertically-arranged tubular store is provided as an SZ-stranding unit (VSZ).

## Revendications

1. Procédé de fabrication d'un élément de transmission optique, qui contient plusieurs guides d'ondes lumineuses réunies en un faisceau par câblage SZ à l'intérieur d'une gaine tubulaire, caractérisé en ce qu'il consiste, immédiatement après le processus de câblage SZ (dans VSZ) s'opérant suivant une direction de passage verticale, à faire passer le faisceau de guides d'ondes lumineuses (BD), dans la région du point de câblage (VP) et un peu au-dessus de celui-ci, à travers une masse de remplissage (FM1) adhérente, de manière à empêcher, par la masse de remplissage (FM1) adhérente, toute détorsion des guides d'ondes lumineuses (LW1, LW2) du faisceau (BD) au moins jusqu'au dépôt et jusqu'à la solidification de la gaine (UH1).

2. Procédé suivant la revendication 1, caractérisé en ce qu'il consiste à placer la masse de remplissage (FM1) dans un récipient (BT), dans lequel le faisceau (BD) est déplacé suivant la direction verticale.

3. Procédé suivant l'une des revendications précédentes, caractérisé en ce qu'il consiste à entourer le faisceau (BD) contenant la masse de remplissage (FM1) d'une autre masse de remplissage (FM2) et à remplir ainsi complètement l'intérieur de la gaine (UH1).

4. Procédé suivant la revendication 3, caractérisé en ce que l'extrémité du cône d'étirage pour la gaine (UH1) fabriquée par extrusion se trouve là où l'autre masse de remplissage (FM2) qui, de préférence est froide, touche la gaine (UH1) appliquée par extrusion.

5. Procédé suivant l'une des revendications 3 ou 4, caractérisé en ce qu'il consiste à amener les masses de remplissage (FM1, FM2) d'une manière proportionnelle à la vitesse d'avance desdites ondes lumineuses (LW1, LW2).

6. Procédé suivant l'une des revendications précédentes, caractérisé en ce qu'il consiste à déposer la gaine en plusieurs couches, suivant des processus opératoires successifs.

7. Procédé suivant l'une des revendications précédentes, caractérisé en ce qu'il consiste à effectuer un refroidissement après le dépôt de la dernière gaine.

8. Procédé suivant la revendication 7, caractérisé en ce qu'il consiste à effectuer, seulement après le refroidissement principal, une déviation vers l'horizontale et une mise à plat correspondante.

9. Procédé suivant l'une des revendications précédentes, caractérisé en ce qu'il consiste à amener lesdites ondes lumineuses (LW1, LW2) au dispositif de câblage (VSZ) avec une force de freinage définie.

10. Dispositif pour la mise en oeuvre du procédé suivant l'une des revendications précédentes, caractérisé en ce qu'il est prévu une unité de câblage SZ (VSZ), à fonctionnement vertical, à la sortie de laquelle est prévu un récipient (BT) qui contient la masse de remplissage (FM1) adhérente, la disposition et la hauteur de chargement du récipient (BT) étant choisies de manière à ce que le point de câblage (BT) se trouve au sein de la masse de remplissage (FM1).

11. Dispositif suivant la revendication 10, caractérisé en ce que directement après le récipient (BT) qui est avantageusement en forme de trémie, est disposée une extrudeuse (EX1) pour le dépôt de la gaine (UH1).

12. Dispositif suivant l'une des revendications 11 ou 12, caractérisé en ce que, comme unité de câblage SZ (VSZ), il est prévu un moufle de régulation tubulaire disposé verticalement.

## FIG 1

## FIG 2